# EUROPEAN PATENT APPLICATION

(11) **EP 4 538 973 A1**
(43) Date of publication of application: **16.04.2025**
(21) Application number: 23203664.0
(22) Date of filing: 13.10.2023
(51) Int. Cl.: G06T 7/292

(54) **OBJECT TRACKING**

(71) Applicant: Helsing GmbH, 81671 Munich (DE)
(72) Inventor: KRAJEWSKI, Robert, 81671 Munich (DE); FINK, Robert, 81671 Munich (DE); SCHMAUSER, Dominik, 81671 Munich (DE)
(74) Representative: Rummler, Felix

(57) **Abstract**

According to an embodiment, there is provided a computer-implemented method for object tracking, the method comprising: tracking an object using a first sensor of a first device, said tracking comprising determining an object identifier for said object based on data from the first sensor; transmitting the object identifier to a second device comprising a second sensor; updating the object identifier based on data from the first sensor; transmitting the updated object identifier to the second device; detecting the object by the second device based on the object identifier or the updated object identifier and data from the second sensor; and tracking said object by the second device.

## Description

### Field

The present disclosure generally relates to object tracking. In particular, the present disclosure relates to methods, devices and systems for tracking objects and object handover between sensors.

### Background

Detection and tracking of objects are used in advanced driver assistance systems and military applications, among others. In military applications, the detection, identification and tracking of objects is performed when targeting objects, for example. The detection, identification and tracking of objects can be performed using mobile sensors, e.g., drones, and/or sensors on the ground. In some scenarios, objects are trackable by a plurality of sensors. An object may enter and exit the perception areas of sensors while the object or the sensors are moving. Specifically, the object may be trackable by a first sensor and then a second sensor. In such case, it is known to perform a "handover" from the first sensor to the second senor. During handover, the object must be re-identified so that the second sensor knows that it is tracking the same object previously tracked by the first sensor.

In military applications, handovers are performed between a sensor and an effector intended to engage the target, wherein the effector receives an information unit about a given target, "slews to cue" (moves into the direction of the target), and then tries to re-identify the target before tracking and engaging the target. This approach requires that the target is guaranteed to appear in the field of view of the effector for re-identification. If that is not the case, re-identification fails as there is nothing to re-identify in the effector's visual field. Moreover, targets without direct line of sight to the effector (e.g., because of an occlusion by a wall or hill) cannot be handed over from one sensor, which "sees" the target, to another (the effector), which does not see the target.

The present invention aims to provide improved methods, systems and devices for improved object tracking and handover.

### Summary of the Invention

The present invention is defined in the independent claims. The dependent claims recite selected optional features.

In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

According to a first aspect of the present disclosure, there is provided a computer-implemented method for object tracking, the method comprising: tracking an object using a first sensor of a first device, said tracking comprising determining an object identifier for said object based on data from the first sensor; transmitting the object identifier to a second device comprising a second sensor; updating the object identifier based on data from the first sensor; transmitting the updated object identifier to the second device; detecting the object by the second device based on the object identifier or the updated object identifier and data from the second sensor; and tracking said object by the second device.

The object corresponds to a target, and the object identifier corresponds to a fingerprint. The second device corresponds to an effector. These expressions may be used interchangeably. The first device/first sensor can continuously update the target's fingerprint and transmit the updated fingerprint to the second device/sensor. Additionally, or alternatively, the first device/sensor may transmit the updated fingerprint to the second device/sensor in response to receiving, from the second device, an indication that the object is not detected or detectable by, in particular not in the field of view of, the second sensor and/or not trackable by the second sensor. The second device/second sensor can "virtually" track the target using the updated fingerprints without actually "seeing" it, i.e., when the target is not (yet) in its field of view (FOV). For example, the target may be moving behind a wall, and the effector is continuously following the updated positions. The effector can place a crosshair on the target during this process as if it had Xray view through the wall. As soon as the target enters the FOV of the second device/second sensor, it is detected using the last received update/version of the fingerprint and then tracked. The effector can then engage the target.

The expression FOV is used herein in a sense to designate a perception area of any sensor, regardless of the type of sensor. Thus, the expression FOV is not intended to be restricted to visual sensors.

In an embodiment, the method further comprises: continuously updating the object identifier based on data from the first sensor; continuously transmitting the updated object identifier to the second device; and detecting the object by the second device based on the last received updated object identifier and data from the second sensor.

The process can be a continuous process, i.e., the first device/first sensor keeps tracking the object, updating the fingerprint and transmitting updated fingerprints to the second device. Thus, the second device always has an up-to-date fingerprint even before it is able to "see" and detect the target, i.e., before the target enters the FOV of the second device/sensor.

In an embodiment, the object identifier describes the object based on one or more parameters or properties associated with the object, including the object's position, movement, visual appearance, class and/or context.

The context of the object (target) may be visual context and include static and/or dynamic context. For example, static context may relate to a target's background such as building behind the target. Dynamic context may relate to a movement of other objects in the proximity. For example, the target may be a vehicle which is part of a convoy with other vehicles, and the target is at the front of the convoy.

These parameters and properties uniquely describe a target. The parameters and properties can change as the target moves within the FOV of the first device/first sensor. For example, the target's position changes, but also the target's visual appearance from the first sensor's point of view (e.g., new visual features may become visible while others may become obscured). By (continuously) monitoring and updating such properties and transmitting updated fingerprints representing the latest available information on the target, the second device is enabled to quickly and accurately detect and engage the target when it enters the second device's FOV.

The object position may be a geographical position and/or a relative position, in particular a position relative to the first device. The visual appearance may relate to one or more selected visual features of the object such as colour, shape, edges and/or texture of the object.

The visual appearance may be represented by a mathematical description, e.g., a vector of decimal numbers, derived by a neural network designed and trained to do so. The mathematical description enables calculating a "visual distance" or "visual similarity" between two objects by comparing the vectors of the two objects.

As the target is perceived by a sensor over time, the fingerprint is expanded to include information accumulated over time. This may be the case even if there is only a single sensor perceiving the target.

In an embodiment, the object identifier is determined based on data from two or more sensors, and in particular from two or more sensors at different positions relative to the object. The method can be implemented in a sensor network including of multiple sensors. The sensors can be of different types, e.g., visual, acoustic or radar sensors, and/or ground or aerial sensors, and any combination of such sensors. The sensor signals and data may include any one or more of electro-optical, infrared, radar, synthetic aperture radar, LIDAR, acoustic and seismic signals, signal-intelligence data, or the like. Certain properties like colour as part of the visual appearance may be derivable by some sensors but not others.

In an embodiment, the method further comprises: obtaining a first object identifier for said object based on data from the first sensor; obtaining another object identifier for said objected based on data from another sensor; and obtaining said object identifier by fusing said first object identifier and said another object identifier.

The fingerprint for a given object can be obtained by fusing different fingerprints for the given object from different sensors. For example, the different sensors may be visual sensors (cameras) observing the object from different viewing angles. Thereby, a more comprehensive fingerprint can be obtained, enabling a more accurate detection and re-identification by the second sensor/second device.

In an embodiment, the method further comprises: determining if the object is to become detectable by the second sensor and/or that the object is to become undetectable by the first sensor; and in response to determining that the object is to become detectable by the second sensor and/or that the object is to become undetectable by the first sensor, transmitting the object identifier from the first device to the second device. To this end, the second sensor may continuously receive updated information about the first sensor's pose (position and orientation) and sensor configuration (e.g., zoom level of a camera)

For example, the first device may make a prediction that the target will enter the FOV of the second sensor. In particular, the first device may determine a likelihood that the object will enter the FOV of the second sensor. If the likelihood exceeds a threshold, a handover is effected, including transmitting the fingerprint to the second device and continuously updating it.

The handover process may be initiated by a human operator, e.g., selecting an object as a target.

In an embodiment, the method further comprises: determining if the object is better detectable by the first device or the second device; and triggering a transmission of the object identifier from the first device to the second device based on the determination.

The target may already be within the FOV of the second device (in addition to the FOV of the first device). In such case, a handover may be initiated if the second device has a "better view" of the target. For example, the first and second indicators may correspond to distances of the first and second sensors from the target, respectively. If the indicators indicate that the second device is closer to the target than the first device, a handover may be initiated. In another example, the indicators may reflect the number and/or types of sensors of the first and second devices available to detect/track the target. If a comparison of the first and second indicators reveals that the second device is better equipped to track the target, a handover is initiated.

A handover may also be initiated in order to free up the first sensor to track other objects.

In an embodiment, said object identifier includes information on the position, movement and/or pose of the object, wherein the method further comprises: controlling the second device and/or the second sensor based on said information, in particular controlling a movement of the second device and/or a detection direction, more particular a field of view of the second sensor.

Based on the information position, movement and/or pose of the target, an effector (the second device) can be controlled to "slew to cue" even before the target is within its FOV. The fingerprint may thus be used not only for re-identification purposes, but also to control a movement of the second device. The controlling can also be used to initialize a tracking system, thereby preparing the tracking process and reducing the risk of losing track of the target if the target and/or the second device (effector) is moving fast.

In an embodiment, detecting the object by the second device comprises re-identifying the object based on information included in said object identifier other than said information on the position, movement and/or pose of the object.

The fingerprint may be based on or include positional information (e.g., information relating to the position, movement and pose of the object) and other information such as an object class or visual features. In this embodiment, the re-identification process may be based on the other information only, without taking into account the positional information. In other words, object re-identification is separated from parameters that may depend on the object's current position, movement or pose. Accordingly, the second device may be configured to process selected parts of information contained in the fingerprint for different, separate purposes.

However, in other embodiments, the target's position, movement and/or pose information is used for re-identification as well. For example, the target may be certain type of vehicle (e.g. tank), and there may be two (or more) vehicles of that type in the target area, having the same visual appearance and belonging to the same class as the target. In such scenario, the speed or location, for example, may be used in addition to the visual features to distinguish the vehicles from one another and re-identify the correct target.

In an embodiment, the object identifier includes information defining one or more object classes for the object.

An object class may be associated with various properties or parameters of an object. For example, there may be object classes for different types of objects such as vehicles, stationary objects (buildings), humans, different types of vehicles (passenger cars, trucks, tanks, boats, ships, drones, etc.), etc. Such object classes may be defined based on physical attributes of the objects, for example size, colour, speed, location etc.

In an embodiment, the method further comprises: controlling the second device based on the one or more object classes for the object.

Different object classes may be associated with different characteristics that may be taken into account in the tracking process by the second device after handover. For example, if the object belongs to the class "drone", the second device must be ready to follow/track sudden movements even if the object is currently stationary.

According to another aspect of the present disclosure, there is provided a first device comprising: a first sensor for tracking an object; one or more storage devices; and one or more processors configured to: determine an object identifier for said object based on data from the first sensor; transmit the object identifier to a second device; update the object identifier based on data from the first sensor; and transmit the updated object identifier to the second device.

According to another aspect of the present disclosure, there is provided a second device comprising: a second sensor for tracking an object; one or more storage devices; and one or more processors configured to: receive an object identifier from a first device; receive an updated identifier from the first device; detect the object based on the object identifier or updated object identifier and data from the second sensor; and track said object.

The first device may include or implement a sensor which makes an initial detection of an object (target). The second device may implement an effector. The first device may generate and (continuously) update a fingerprint associated with the target and transmit the (updated) fingerprint to the second device which uses the received fingerprint for re-identifying the target. The first and/or second devices may be implemented by or installed in vehicles (manned/unmanned), drones, airplanes, vessels, satellites, or the like.

According to another aspect of the present disclosure, there is provided a system comprising the above-described first and second devices, wherein the system is configured to perform some or all of the steps of the computer-implemented method described above.

According to another aspect of the present disclosure, there is provided a computer program product for loading into a memory of a computer, comprising instructions, that, when executed by a processor of the computer, cause the computer to execute some or all of the steps of the computer-implemented method described above.

### Brief description of the drawings

The features, objects, and advantages of the present disclosure will become more apparent from the detailed description set forth below when taken in conjunction with the drawings in which:
Figure 1 illustrates a schematic illustration of a system for object tracking and handover according to an embodiment of the present disclosure;
Figure 2 illustrates a flow chart of a method for object tracking and handover according to an embodiment of the present disclosure; and
Figure 3 illustrates a schematic block diagram of a device according to an embodiment of the present disclosure.

### Detailed description of exemplary embodiments

The present disclosure provides new methods, systems and devices for the tracking, handover and engagement of targets. For a target handover, a sensor network with at least a sensor and an effector is required. Preferably, there are at least two sensors. The sensors may be implemented by electro-optical or infrared cameras, but other sensor types are also suitable. Irrespective of the sensor technology employed, the sensor network detects and tracks a potential target using customized neural network-based detection and tracking algorithms. While tracking the potential target, a fingerprint of the target is continuously created and updated. The fingerprint uniquely describes the target based on different properties, including the object's position and movement (direction), the object's class, as well as the object's visual appearance as a latent representation. In case of a sensor network comprising multiple (more than two) sensors, the fingerprints obtained by individual sensors can be fused to obtain a more comprehensive and precise fingerprint. For example, fused fingerprints include information reflecting a perception of the target from different viewing angles.

As soon as a tracked object (e.g., target) is to be assigned to another sensor effector (e.g., effector) the fingerprint is transmitted to the effector as a data packet through networking. Such assignment for handover to another sensor can be made based on a prediction that the target will appear in the field of view (FOV) of the effector/other sensor, that the target will leave the FOV of the initial sensor, that the other sensor is more suitable to track/engage with the target, and/or that the effector is the nearest/optimal/a suitable effector to hit the target. Based on the position and movement information in the transmitted fingerprint, the effector slews to cue and tries to detect and re-identify the target. This may be done using the information on the target's properties other than position and movement information as provided in the fingerprint. However, if the target is outside the effector's sensors' visual field, because of the local topology, vegetation or buildings, for example, this process continues. To enable this, the sensors in the sensor network continuously update the target's fingerprint and transfer the updated information to the effector. This continued updating of target information, especially the position and movement information, and the continuous transmission of the updated information from the sensors to the effector enables the effector to virtually target and track the object even when it is not yet in its FOV.

As soon as the target enters the effector's sensors' FOV and is not occluded, the effector detects and re-identifies the target. To this end, the effector uses the latest fingerprint provided by the sensor network: The re-identification compares the position, class and visual appearance of any detected object against those of the assigned target. Based on a configurable matching threshold, the object is re-identified as target. Finally, after successful re-identification, the effector's internal tracking system is initialized using both the information provided by its own sensors and the information provided by the fingerprint. The movement information, in particular, can be used to initialize the internal tracking system, which reduces the risk of losing track of the target if the target and/or the effector are fast-moving. Thereafter, the target handover is completed, and the effector can start engaging the handed-over target.

Object detection and fingerprint generation can be implemented using known approaches e.g. based on neural networks. It is possible to perform both tasks jointly in a single neural network, or separately two neural networks that are completely independent or share some components. An example for a neural network architecture performing object detection is YOLOv5. These models are as such known and not described further herein.

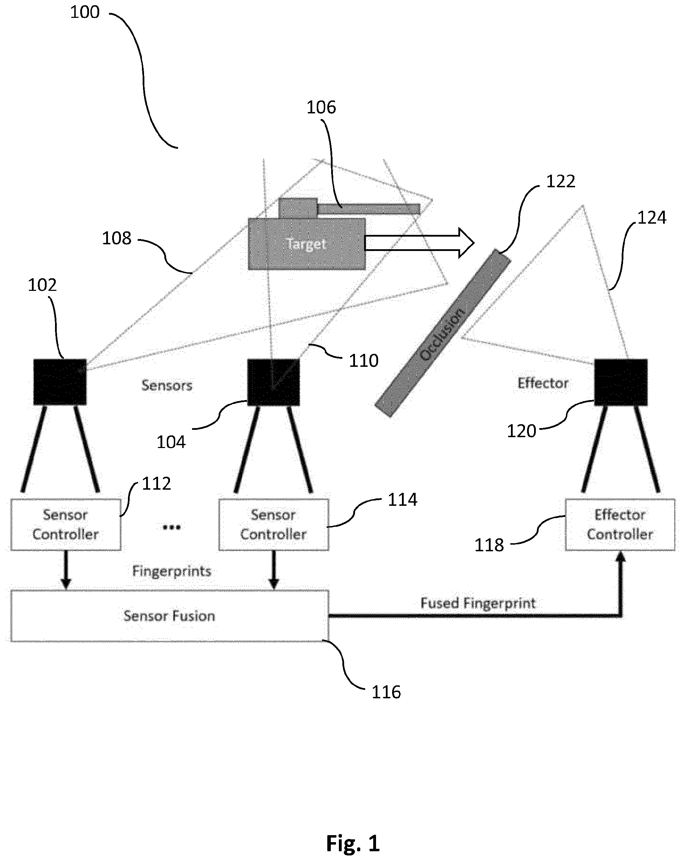

Figure 1 illustrates a schematic illustration of a system 100 for object tracking and handover according to an embodiment of the present disclosure. The system comprises first and second sensors 102 and 104 for detecting and tracking an object or target 106. The sensors 102 and 104 may be any type of sensor, e.g., cameras, radar sensors, lidar sensors, acoustic sensors etc. Also, the sensors 102 and 104 may be ground sensors or aerial sensors. There may be any number of sensors and any combination of different types of sensors.

In the illustrated embodiment, the target 106 is within FOVs 108, 110 of the sensors 102, 104, respectively. The sensors 102, 104 are coupled with respective sensor controllers 112, 114. The sensor controller 112 receives and processes the sensor data from the sensor 102 to generate a fingerprint that uniquely identifies the target 106. For example, the sensor 102 may be implemented by a first camera, and the image frames from the camera are processed by the controller 112 to identify visual features of the target 106. The sensor 104 may be implemented by a second camera, and the image frames are processed by the controller 114 also to identify visual features of the target 106. Since the sensors 102, 104 observe the target from different angles, different visual features may be detected, or a given visual feature may have different appearances.

Each of the sensor controllers 112, 114 is configured to generate a fingerprint based on the received sensor data from the sensors 102, 104, respectively. The fingerprints are based on detected visual features. In addition, visual features in consecutive image frames may be processed to detect a movement of the target 106. Additional information may be taken into account, e.g., positional information (relative and/or absolute positions), temporal information (e.g., a time of detection) and/or contextual information (e.g., the presence of other objects in the proximity of the target 106) to determine the fingerprint. As data from the sensors 102, 104 differ from one another, each of the sensor controllers 112, 114 generates a different, unique fingerprint.

In the illustrated embodiment, the system also comprises a processing device 116 that is configured to fuse the fingerprints from the sensor controllers 112, 114 ("sensor fusion"). That is, the processing device 116 generates a new fingerprint ("fused fingerprint") based on the fingerprints generated the sensor controllers 112, 114. The fused fingerprint thus combines information on the target that has been captured by both sensors 112, 114, from different angles. Consequently, the fused fingerprint is more comprehensive and can be used to more reliably detect and re-identify the target by another sensor following handover.

The sensors 102, 104 constantly produce new sensor data which is processed by the sensor controllers 112, 114 to update the fingerprints. The processing device 116 is configured to constantly process the fingerprints to generate updated, fused fingerprints. Further, the processing device 116 is configured to constantly transmit the fused, updated fingerprints to an effector controller 118 of an effector 120. The effector 120 is another sensor to detect and engage the target 106. Similar to the sensors 102, 104, the effector 120 constantly produces sensor data which is processed by the effector controller 118 to detect objects within its FOV 118. In particular, the effector controller 118 is configured to use the fused fingerprints from the processing device 116 to re-identify and engage the target 106 when it enters its FOV 124.

In the illustrated scenario, there is an occlusion 122 within the FOV 124 of the sensor 120 between the target 106 and the sensor 120. Due to the occlusion 122, the effector 120 cannot (yet) detect and engage the target 106. However, since the effector controller 118 constantly receives updated fingerprints that reflect the current state, position and/or movement of the target, it can quickly and reliably re-identify the target when it enters its FOV. Also, the effector controller 118 may be configured to extract information from the received fingerprints to prepare the effector 120 for re-identification and engagement. For example, information relating to the position and movement of the target 106 may be used to control a movement of the effector 120 towards a better position and/or to "slew to cue" i.e., point the effector 120 in a direction towards an expected point of entry of the target 106 into the FOV 124.

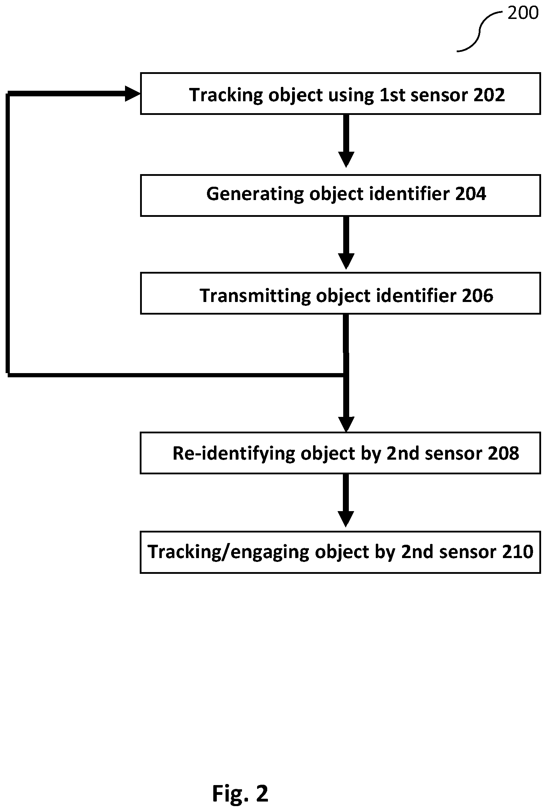

Figure 2 illustrates a flow chart of a method for object tracking and handover according to an embodiment of the present disclosure. The method may be implemented using the system as shown in and described in connection with Figure 1. In step 202, an object is detected by a first sensor. The first sensor may be any type of sensor, as described above. In step 204, an object identifier is generated. The object identifier uniquely identifies the detected object and enables re-identification by another sensor. The object identifier may include information relating to the visual appearance, position, movement, class and other characteristics and parameters of the detected object. In step 206, the object identifier is transmitted to another sensor to enable the other sensor to re-identify the object using the object identifier.

In an embodiment, steps 202, 204 and 206 are iteratively repeated. In each iteration, for a given tracked object, either a new object identifier is generated, or an existing object identifier is updated (step 204). For example, the first sensor may move relative to the object so that the sensor data produced by the first sensor may be different in each iteration. The first sensor may be a camera, and the sensor data may include image frames, wherein different visual features are detected as the first sensor moves relative to the object. In each iteration, the object identifier is updated to reflect newly detected information. The updating may include replacing existing information, e.g., replacing information relating to a visual feature that is no longer visible by information relating to a newly detected visual feature. Alternatively, the object identifier may be supplemented to reflect past and current detectable features, thereby expanding the information contained in the object identifier in each iteration. The above is not limited to visual features but any sensor data and information produced by the first sensor.

In step 208, the object identifier is used by another (second) sensor to re-identify the object. As described in connection with Figure 1, this may be preceded by preparatory actions such as controlling a movement of a vehicle carrying the second sensor and/or changing an orientation of a FOV of the second sensor, thereby accelerating the re-identification process. In step 210, the object is tracked/engaged by the second sensor, thereby completing the handover from the first sensor. The first sensor may continue to track the object and deliver information to the second sensor, thereby to improve the tracking by the second sensor. This helps, for example in scenarios in which the target is moving relative to the second sensor and may temporarily become partially or fully obscured. Another example are engagement scenarios. Here, the first sensor's data may have high value while the second sensor is engaging. The first sensor's data may improve targeting accuracy and provide additional feedback, e.g., for battle damage assessment. Also, the effector's capability to track the target may be temporarily impaired, e.g., due to vibrations or smoke, and the first sensor's data can be used to compensate for such impairments.

Alternatively, the first sensor may disengage the object.

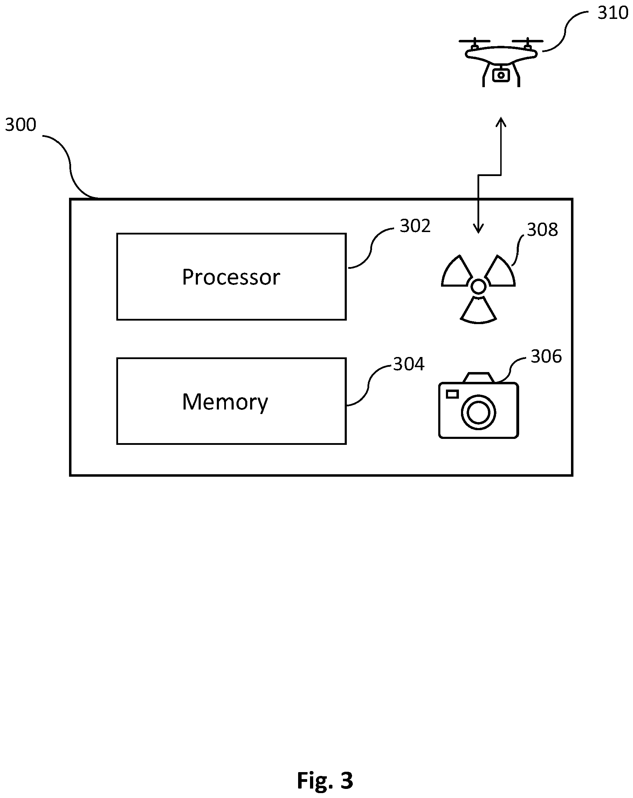

Figure 3 illustrates a schematic block diagram of a device 300 according to an embodiment of the present disclosure. The device 300 comprises at least one processor 302 and a memory 304. The memory 304 can be any type of memory. The device 300 also comprises a sensor 306 and a receiver/transmitter 308 to enable communications with another device 310. The processor 302, memory 304, sensor (e.g., camera) 306 and receiver/transmitter 308 are communicatively coupled with one another.

The memory 304 stores instructions that, when executed by the processor 302, result in the execution, at least in part, of a method as described above. For example, the device 300 may detect a target using the camera 306 and iteratively generate fingerprints for the detected target. The fingerprints are transmitted to the other device 310 using the receiver/transmitter 308. Alternatively, the device 300 may implement an effector that receives fingerprints from the other device 310 using the receiver/transmitter 308 and uses the fingerprints to re-identify a target detected by the other device 310. The device 302 may be configured to implement both functions interchangeably during the course of a mission. That is, the device 302 may first be the detector of a target and initiator of a handover to the other device 310, as described above, and subsequently act as the effector in respect of another target for which fingerprints are received from the other device 310, and vice versa.

Accordingly, in embodiments of the present disclosure, regular tracking updates are sent from a sensor, which "sees" the target, to an effector, which does not. Using these tracking updates, the effector gradually follows the target even without direct line of sight. The use of regular tracking updates enables the effector to move into the right direction and follow the target without seeing it. As the target emerges in the effector's FOV, the effector will already have moved in the right direction. This provides a time benefit, as the effector no longer needs to await detection before moving into that direction.

From the tracking updates, velocities and directions of the target can be derived. This information enables anticipating the position of the target in the next few instances. Also, this enables the effector to successfully complete a target handover of fast-moving targets as they appear in the effector's FOV. In other words, the time of completion and robustness of the handover process are improved.

Overall, the systems of the present disclosure are more robust than conventional systems, as they do not require a human operator who needs to wait until a target is visible in an effector's FOV and correct the position of the effector in case of a failed target handover.

As described above, the fingerprint generation process can include multiple different components, covering visual aspects, position estimates, surrounding context and temporality. As a result, information-rich fingerprints are generated that uniquely define associated detected objects. In an embodiment, the fingerprint generation uses positional information regarding the detected object. For example, a geo-position of the detected object may be determined using a single camera localisation approach supported by object size estimation based on object class. Alternatively, or in addition, multi-camera triangulation may be employed. Furthermore, pose and orientation of the object may be determined, for example using visual deep learning models. A detection of position similarity may be used to avoid misidentifications due to visual similarity between different objects.

In an embodiment, the fingerprint generation process takes into account context information, e.g., information relating to the environment/surrounding of the detected object. Surrounding "awareness" enables extracting key features shared between different sensors, e.g., cameras and determining a constellation of visible objects. This contextual information can be used to define reference points between different sensors (e.g., cameras) when re-identifying an object during the handover. For example, detected key-points may be matched between different cameras. Also, the contextual information can be used to define boundaries of observation in the re-identification/handover of obj ects. Further, if there are multiple objects in an observed area, the position of the objects in respect to each other, i.e., their constellation, enables selecting a targeted object by position transfer in between cameras.

The above-described components and features contribute to a similarity function to re-identify the correct object. In an embodiment, the components and features may be selected and combined to determine a confidence score for correct re-identification.

## Claims

1. A computer-implemented method for object tracking, the method comprising:
tracking an object using a first sensor of a first device, said tracking comprising determining an object identifier for said object based on data from the first sensor;
transmitting the object identifier to a second device comprising a second sensor;
updating the object identifier based on data from the first sensor;
transmitting the updated object identifier to the second device;
detecting the object by the second device based on the object identifier or the updated object identifier and data from the second sensor; and
tracking said object by the second device.

2. The method of claim 1, further comprising:
continuously updating the object identifier based on data from the first sensor;
continuously transmitting the updated object identifier to the second device; and
detecting the object by the second device based on the last received updated object identifier and data from the second sensor.

3. The method of claim 1 or 2, wherein the object identifier describes the object based on one or more parameters or properties associated with the object, including the object's position, movement, class, and/or visual appearance.

4. The method of any preceding claim, wherein the object identifier is determined based on data from two or more sensors, and in particular from two or more sensors at different positions relative to the object.

5. The method of any preceding claim, further comprising:
obtaining a first object identifier for said object based on data from the first sensor;
obtaining another object identifier for said objected based on data from another sensor; and
obtaining said object identifier by fusing said first object identifier and said another object identifier.

6. The method of any preceding claim, further comprising:
determining if the object is to become detectable by the second sensor and/or that the object is to become undetectable by the first sensor; and
in response to determining that the object is to become detectable by the second sensor and/or that the object is to become undetectable by the first sensor, transmitting the object identifier from the first device to the second device.

7. The method of any preceding claim, further comprising:
determining if the object is better detectable by the first device or the second device; and
triggering a transmission of the object identifier from the first device to the second device based on the determination.

8. The method of any preceding claim, wherein said object identifier includes information on the position, movement and/or pose of the object, wherein the method further comprises:
controlling the second device and/or the second sensor based on said information, in particular controlling a movement of the second device and/or a detection direction, more particular a field of view of the second sensor.

9. The method of claim 8, wherein detecting the object by the second device comprises re-identifying the object based on information included in said object identifier other than said information on the position, movement and/or pose of the object.

10. The method of any preceding claim, wherein object identifier includes information defining one or more object classes for the object.

11. The method of claim 10, further comprising:
controlling the second device based on the one or more object classes for the object.

12. A first device comprising:
a first sensor for tracking an object;
one or more storage devices; and
one or more processors configured to:
determine an object identifier for said object based on data from the first sensor;
transmit the object identifier to a second device;
update the object identifier based on data from the first sensor; and
transmit the updated object identifier to the second device.

13. A second device comprising:
a second sensor for tracking an object;
one or more storage devices; and
one or more processors configured to:
receive an object identifier from a first device;
receive an updated identifier from the first device;
detect the object based on the object identifier or updated object identifier and data from the second sensor; and
track said object.

14. A system comprising the first device of claim 12 and the second device of claim 13, wherein the system is configured to perform the computer-implemented method of any of claims 1 to 11.

15. A computer program product for loading into a memory of a computer, comprising instructions, that, when executed by a processor of the computer, cause the computer to execute the computer-implemented method of any of claims 1-11.

## Amended claims

### Amended claims in accordance with Rule 137(2) EPC.

1. A computer-implemented method (200) for object tracking, the method comprising:
tracking (202) an object using a first sensor of a first device, said tracking comprising determining (204) an object identifier for said object based on data from the first sensor;
transmitting (206) the object identifier to a second device comprising a second sensor;
updating the object identifier based on other data from the first sensor;
transmitting the updated object identifier to the second device;
detecting (208) the object in a field of view of the second sensor by the second device based on the object identifier or the updated object identifier and data from the second sensor;
tracking (210) said object by the second device;
determining if the object is better detectable by the first device or the second device; and
triggering a transmission of the object identifier from the first device to the second device based on the determination.

2. The method (200) of claim 1, further comprising:
continuously updating the object identifier based on new data from the first sensor;
continuously transmitting the updated object identifier to the second device; and
detecting the object by the second device based on the last received updated object identifier and data from the second sensor.

3. The method (200) of claim 1 or 2, wherein the object identifier describes the object based on one or more parameters or properties associated with the object, including the object's position, movement, class, and/or visual appearance.

4. The method (200) of any preceding claim, wherein the object identifier is determined based on data from two or more sensors, and in particular from two or more sensors at different positions relative to the object.

5. The method (200) of any preceding claim, further comprising:
obtaining a first object identifier for said object based on data from the first sensor;
obtaining another object identifier for said objected based on data from another sensor; and
obtaining said object identifier by fusing said first object identifier and said another object identifier.

6. The method (200) of any preceding claim, further comprising:
determining if the object is to become detectable by the second sensor and/or that the object is to become undetectable by the first sensor; and
in response to determining that the object is to become detectable by the second sensor and/or that the object is to become undetectable by the first sensor, transmitting the object identifier from the first device to the second device.

7. The method (200) of any preceding claim, wherein said object identifier includes information on the position, movement and/or pose of the object, wherein the method further comprises:
controlling, based on said information, a movement of the second device and/or a detection direction of the second sensor, in particular the field of view of the second sensor.

8. The method (200) of claim 7, wherein detecting the object by the second device comprises re-identifying the object based on information included in said object identifier other than said information on the position, movement and/or pose of the object.

9. The method (200) of any preceding claim, wherein the object identifier includes information defining one or more object classes for the object.

10. The method (200) of claim 9, further comprising:
controlling the second device based on the one or more object classes for the object, wherein the one or more object classes are associated with different object characteristics to be taken into account when tracking the object by the second device.

11. A system comprising:
first device (300) comprising:
a first sensor (306) for tracking an object;
one or more storage devices (304); and
one or more processors (302) configured to:
determine an object identifier for said object based on data from the first sensor;
transmit the object identifier to a second device;
update the object identifier based on new data from the first sensor;
transmit the updated object identifier to the second device; and.
a second device (310) comprising:
a second sensor for tracking an object;
one or more storage devices; and
one or more processors configured to:
receive an object identifier from a first device;
receive an updated identifier from the first device;
detect the object based on the object identifier or updated object identifier and data from the second sensor; and
track said object,
wherein the system is configured to perform the computer-implemented method of any of claims 1 to 10.

12. A computer program product for loading into a memory of a computer, comprising instructions, that, when executed by a processor of the computer, cause the computer to execute the computer-implemented method (200) of any of claims 1-10.
